# EUROPÄISCHE PATENTANMELDUNG

(11) **EP 1 795 884 A1**
(43) Veröffentlichungstag der Anmeldung: **13.06.2007**
(21) Anmeldenummer: 05090334.3
(22) Anmeldetag: 07.12.2005
(51) Int. Cl.: G01N 9/36

(54) **Verfahren und Vorrichtung zur Messung der Dichte eines landwirtschaftichen Gutes**

(71) Anmelder: Leibnitz-Inst. für Agrartechnik-Potsdam-Bornim e.V, 14469 Postdam-Bornim (DE)
(72) Erfinder: Fürll, Christian, 14469 Potsdam (DE); Schemel, Hartmut, 14822 Brück (DE)
(74) Vertreter: Schubert, Klemens

(57) **Zusammenfassung**

Verfahren zur Messung der Dichte eines landwirtschaftlichen Gutes, wobei man mit einem Dichtesensor während des fortgesetzten Verdichtens eines landwirtschaftlichen Gutes die Dichte des landwirtschaftlichen Gutes kontinuierlich oder diskontinuierlich online misst.

## Beschreibung

Die Erfindung betrifft ein Verfahren zur Messung der Dichte eines landwirtschaftlichen Gutes sowie eine Vorrichtung zur Durchführung des Verfahrens.

Landwirtschaftliche Güter, wie zum Beispiel zerkleinerte Getreide- und Maiskörner oder gehäckseltes Grüngut können durch Verdichtung und damit Verringerung des eingeschlossenen Luftvolumens konserviert werden. Im großen Umfang angewendet wird das Verfahren zum Beispiel bei der Silierung von gehäckseltem Mais oder Gras in Horizontalsilos. Dabei wird Grünguthäcksel lagenweise in ein Silo eingebracht und durch Überfahren mit einem Traktor, Radlader oder einer Walze verdichtet. Die Qualität des konservierten Futters und die Lagerungsverluste werden entscheidend von der Verdichtung und der Erreichung einer Mindestlagerungsdichte bestimmt.

Vorwiegend für Forschungszwecke werden Verfahren angewendet, bei denen mit speziellen Messgeräten punktuell und diskontinuierlich Messungen vorgenommen werden. Das ist möglich mit radiometrischen Sonden, die in das Gut mindestens 20 cm tief eingesteckt werden müssen. In der Praxis werden auch Einstechzylinder verwendet, mit denen ein definiertes Volumen des Gutes entnommen und zur Berechnung der Dichte verwogen wird. Beide Verfahren sind derart aufwendig oder risikobehaftet, dass in der Regel auf eine Dichtemessung verzichtet wird. Stattdessen findet bestenfalls eine visuelle Beurteilung anhand der Einsinktiefe des Verdichtungsfahrzeuges statt, die jedoch eine quantitative Aussage nicht zulässt.

Bekannt sind Messeinrichtungen an Verdichtungswalzen für die Herstellung von Bauuntergründen, zum Beispiel im Straßenbau. Hierbei wird ein Beschleunigungssensor verwendet, der mit der Vibrationswalze der Maschine verbunden ist. Auf einem durch eine bestimmte Zusammensetzung definierten Untergrund, mit vorher messtechnisch ermittelter Verdichtung, liefert er ein Referenzsignal, das denn als Zielvorgabe für die gesamte Fläche des gleichen Untergrundes dient. Dieser Referenzwert wird dem Fahrer auf verschiedene Weise in der Kabine des Verdichtungsfahrzeugs angezeigt. Das Verfahren hat den Nachteil, dass die Dichte nicht direkt gemessen wird. Außerdem kann es nur für vibrierende Maschinen mit konstanter Eigenfrequenz angewendet werden.

Aufgabe der vorliegenden Erfindung ist die Messung der Dichte eines landwirtschaftlichen Gutes, um eine optimale Konservierung des landwirtschaftlichen Gutes zu ermöglichen.

Die Aufgabe der vorliegenden Erfindung wird durch ein Verfahren gelöst, bei dem man mit einem Dichtesensor während des fortgesetzten Verdichtens eines landwirtschaftlichen Gutes die Dichte des landwirtschaftlichen Gutes kontinuierlich oder diskontinuierlich online misst.

Unter landwirtschaftlichem Gut werden alle Arten von Agrarprodukten, wie zum Beispiel erntefeuchtes Getreide und Maiskörner, Futtermittel oder gehäckseltes Grüngut verstanden.

Landwirtschaftliches Gut, das in Silos, insbesondere Horizontalsilos, auf Freiflächen, oder in Hallen lagert wird zur Konservierung verdichtet. Dabei wird das landwirtschaftliche Gut lagenweise in das Silo eingebracht.

Durch Überfahren mit einem Verdichtungsfahrzeug, wie zum Beispiel einem Traktor, einer Walze, einem Radlader oder einem anderen geeigneten Fahrzeug wird das landwirtschaftliche Gut verdichtet. Durch diesen Verdichtungsprozess wird das eingeschlossene Luftvolumen verringert und damit das Gut konserviert. Die Qualität des konservierten Gutes und die Lagerungsverluste werden entscheidend von der Verdichtung und der Erreichung einer Mindestlagerungsdichte bestimmt. Nur wenn die Dichte während des Verdichtungsvorgangs gemessen und angezeigt werden kann, ist es dem Fahrer/Bediener einer Verdichtungsapparatur möglich, die notwendige Lagerungsdichte mit minimalem Aufwand zu erreichen.

Die Messdaten des Dichtesensors leitet man vorzugsweise an eine Auswerteeinheit weiter und stellt sie auf einer Anzeigeeinheit dar. Die Dichte des landwirtschaftlichen Gutes wird online gemessen, d.h. zeitgleich mit dem Verdichten des landwirtschaftlichen Gutes werden die durch die Messsensoren genommenen Werte an die Auswerteeinheit und von dort an die Anzeigeeinheit weitergeleitet. Der Benutzer einer Verdichtungsapparatur erhält somit während des Verdichtens eine aktuelle Information über die Dichte des landwirtschaftlichen Gutes, das er gerade verdichtet. Dies ermöglicht es ihm, während des Verdichtens zu entscheiden, ob das Gut einer weiteren Verdichtung bedarf.

Die Messung erfolgt dabei sowohl kontinuierlich als auch diskontinuierlich. Bei einer kontinuierlichen Messung werden permanent Messwerte genommen und an die Auswerteeinheit weitergeleitet. Es ist aber auch möglich, beziehungsweise durch die Bauart oder Anbringung des Messsensors bedingt, dass die Messwerte nur in bestimmten Intervallen gemessen werden können. Bei der diskontinuierlichen Messung werden verschiedene Messpunkte festgelegt, an denen eine Messung erfolgt. Die ermittelten Daten werden aber auch hier, zeitgleich mit der Messung an die Auswerteeinheit weitergeleitet.

Die Dichte wird bevorzugt an der Oberfläche des landwirtschaftlichen Gutes gemessen. Dabei wird die Dichte bis in eine Tiefe von ca. 30 cm gemessen. Der Dichtesensor wird berührungslos über die Oberfläche geführt, er kann aber auch mit der Oberfläche in Kontakt gebracht werden. Die berührungslose Messung hat den Vorteil, dass die Messeinheiten besser vor Verschmutzung oder Beschädigungen geschützt sind.

Für jede Art von landwirtschaftlichem Gut, gibt es eine spezifische Dichte, bei der das Gut optimal konserviert wird. Das landwirtschaftliche Gut wird so lange weiter verdichtet, bis dieser Dichte, d.h. der gewünschte Soll-Wert, erreicht wird.

Wichtig ist die Verdichtung der Oberfläche des landwirtschaftlichen Gutes. Ist die obere Schicht des Gutes verdichtet, wird es Gasen aus unteren Schichten erschwert aus dem landwirtschaftlichen Gut zu entweichen, wodurch eine optimale Konservierung des Gutes erreicht wird. Die unteren Schichten des Gutes werden durch das Gewicht der über ihnen gelagerten Schichten verdichtet.

In einer bevorzugten Ausführungsform der Erfindung vergleicht man in der Auswerteeinheit die vom Dichtesensor gemessenen Werte mit dem Soll-Wert des landwirtschaftlichen Gutes und leitet die Abweichung zwischen den Werten an die Anzeigeeinheit weiter. Durch dieses Verfahren wird es dem Fahrer eines Verdichtungsfahrzeuges oder einer anderen Verdichtungsapparatur ermöglicht, beim Verdichten eine online-Dichtemessung durchzuführen. Er ist somit zeitgleich mit dem Überfahren des landwirtschaftlichen Gutes über dessen Beschaffenheit informiert und ist somit in der Lage zu entscheiden, ob die von ihm bearbeite Stelle des landwirtschaftlichen Gutes einer weiteren Verdichtung bedarf.

Der Soll-Wert eines landwirtschaftlichen Gutes ist jedoch auch abhängig von der Feuchtigkeit des Gutes. Deshalb misst man vorzugsweise mit einem weiteren Sensor die Feuchtigkeit des landwirtschaftlichen Gutes und leitet die Messwerte der Feuchtigkeitsbestimmung an die Auswerteeinheit weiter. Der Feuchtigkeitssensor kann in dem Sensor für die Dichtemessung integriert sein oder ein eigenständiger Sensor sein. Bei der Messung kann der Feuchtigkeitssensor in Kontakt mit dem landwirtschaftlichen Gut gebracht werden. Es ist aber auch möglich, dass die Feuchtigkeitsmessung berührungslos vorgenommen wird, d. h. dass der Feuchtigkeitssensor bei der Messung ohne Kontakt zur Oberfläche des landwirtschaftlichen Gutes über diese hinweggeführt wird.

In einer weiteren bevorzugten Ausführungsform der Erfindung vergleicht man in der Auswerteeinheit die Messwerte mit dem Soll-Wert des landwirtschaftlichen Gutes unter Berücksichtigung der Feuchtigkeit des landwirtschaftlichen Gutes und leitet die Abweichung an die Anzeigeeinheit weiter.

Vorzugsweise bestimmt man die Position, an der ein Messwert genommen wird und leitet diese Positionswerte an die Auswerteeinheit weiter. Dadurch, dass man nicht nur die Dichte allein misst, sondern auch gleichzeitig die Position bestimmt, an der die Dichtebestimmung stattgefunden hat, ist es möglich die Oberfläche des landwirtschaftlichen Gutes zu kartographisieren. Hierdurch wird dem Benutzer ein Überblick über das gesamte zu verdichtende landwirtschaftliche Gut ermöglicht. Ferner werden ihm die Stellen aufgezeigt, die einer weiteren Verdichtung bedürfen.

Die Anzeigeeinheit gibt vorzugsweise die Dichte des landwirtschaftlichen Gutes akustisch wieder und/oder stellt sie visuell dar. Die Anzeigeeinheit stellt somit eine Schnittstelle zwischen der Auswerteeinheit und dem Benutzer dar. Sie ermöglicht es ihm die gewonnenen Daten zu betrachten. Dabei wird dem Benutzer ein Übersichtsbild dargestellt, aus dem er alle für ihn wichtigen Daten über die Position, die Dichte des landwirtschaftlichen Gutes und die Feuchtigkeit des landwirtschaftlichen Gutes sowie die für dieses landwirtschaftliche Gut optimale Verdichtung, entnehmen kann. Diese Daten können durch eine entsprechende Software benutzerfreundlich aufbereitet werden. Dies kann in Form von Einzelwerten, Tabellen, Diagrammen oder ähnlichem geschehen. Es ist jedoch auch möglich dem Benutzer eine Übersichtskarte der Oberfläche des landwirtschaftlichen Gutes in einem Silo aufzuzeigen, in der die Verdichtung des Gutes durch spezielle, den einzelnen Dichtewerten zugeordneten Farben dargestellt wird.

Die gemessenen Werte können aber auch in akustischer Form wiedergegeben werden, beispielsweise durch ein Signal, welches beim Erreichen der erforderlichen Dichte ertönt.

Des Weiteren wird die Aufgabe der Erfindung durch eine Vorrichtung gelöst, die aus mindestens einem Messsensor und mindestens einer Anzeigeeinheit, die mit einer Auswerteeinheit verbunden sind, besteht. Dabei liefert der Messsensor beim Verdichten des landwirtschaftlichen Gutes Messwerte, die an die Auswerteeinheit weitergeleitet werden. In der Auswerteeinheit werden die Messwerte aufbereitet, dass heißt durch eine Software ausgewertet. So können in der Auswerteeinheit die gemessenen Werte mit Soll-Werten, wie zum Beispiel die für die Konservierung optimale Dichte, verglichen werden. Diese aufbereiteten Daten werden dann an die Anzeigeeinheit weitergeleitet.

Die Übertragung der gemessenen Werte kann dabei durch eine direkte Verbindung über ein Kabel oder aber durch eine kabellose Verbindung wie zum Beispiel eine Funkverbindung oder ähnliches hergestellt werden.

Die Auswerteeinheit kann in den Messsensor oder in die Anzeigeeinheit integriert werden oder als einzelne Baugruppe vorliegen.

Die Auswerteeinheit kann mit einem Speicher versehen werden, der es ermöglicht, die gemessenen Daten zu speichern und mit den Werten weiterer Messungen zu vergleichen.

Der Messsensor ist bevorzugt ein Dichtesensor und/oder ein Feuchtigkeitssensor. Der Dichtsensor kann eine radiometrische Sonde sein. Es kann aber auch jeder weitere Dichtesensor verwendet werden, der eine mit dem Verdichtungsprozess zeitgleiche Messung der Dichte des landwirtschaftlichen Gutes ermöglicht.

Die Dichtemessung des landwirtschaftlichen Gutes kann durch den Feuchtigkeitsgrad des Gutes beeinträchtigt werden. Daher misst ein zweiter Messsensor die Feuchtigkeit des landwirtschaftlichen Gutes.

Der Dichtesensor und/oder der Feuchtigkeitssensor sind derart an der Verdichtungsapparatur befestigt, dass sie zeitgleich mit dem Verdichten, zum Beispiel beim Überfahren des landwirtschaftlichen Gutes, dessen Dichte beziehungsweise dessen Feuchtigkeit messen. Die auf diese Weise gemessenen Werte werden an die Auswerteeinheit weitergeleitet und von dort an die Anzeigeeinheit. Dadurch wird der Benutzer der Verdichtungsapparatur während des Verdichtens darüber informiert, ob eine weitere Verdichtung notwendig ist.

Der Dichtesensor und/oder der Feuchtigkeitssensor werden derart an der Verdichtungsapparatur befestigt, dass sie in Kontakt mit der Oberfläche des landwirtschaftlichen Gutes gebracht werden, es ist aber auch möglich die Sensoren bei der Messung berührungslos über die Oberfläche des Gutes zu führen.

Der Dichtesensor und der Feuchtigkeitssensor können als ein multifunktionaler Messsensor vorliegen.

Weiterhin ist es möglich weitere Parameter, wie zum Beispiel die Temperatur oder der Luftdruck, gemessen werden. Hierzu können weitere Messsensoren an die Auswerteeinheit angeschlossen werden.

In einer bevorzugten Ausführungsform der Erfindung ist eine Messeinheit zur Bestimmung der Position der Messung vorgesehen. Dies hat den Vorteil, dass bestimmt werden kann welche Stellen der Oberfläche bereits verdichtet wurden und welche nicht.

Weiter bevorzugt ist die Messeinheit ein Navigationssystem, das die Position der Messung bestimmt und an die Auswerteeinheit weiterleitet. Die Auswerteeinheit kann dann anhand der Positionsdaten berechnen, welche Stellen des landwirtschaftlichen Gutes bereits verdichtet wurden und welche Stellen noch einer weiteren Verdichtung bedürfen.

Die Messeinheit ist vorzugsweise ein Wegemesssystem, ein Abstandsmesssystem oder ein Lagemesssystem.

Vorzugsweise sind zwei oder mehrere der genannten Messsysteme vorgesehen.

Die durch die Messsensoren und/oder Messeinheiten gemessenen Werte und durch die Auswerteeinheit mit dem Soll-Wert des landwirtschaftlichen Gutes verglichenen Werte sind vorzugsweise durch eine Anzeigeeinheit akustisch wiedergebbar oder visuell darstellbar. Anhand der durch die Messung der Dichte, der Feuchtigkeit und der Position gewonnenen Werte, ist eine Kartographisierung der gesamten Oberfläche des landwirtschaftlichen Gutes möglich. Die auf diese Weise gewonnen Daten können auf der Anzeigeeinheit dargestellt werden und geben darüber Auskunft, welche Bereiche des landwirtschaftlichen Gutes verdichtet werden müssen und welche bereits der gewünschten Dichte entsprechen.

Die Dichtemessvorrichtung ist vorzugsweise in eine Verdichtungsapparatur eingebaut oder an ihr befestigt. Ein Verdichtungsfahrzeug kann bereits mit einer solchen Dichtemessvorrichtung ausgestattet sein, bei der sich ein Dichtesensor an der Unterseite des Fahrzeugs befindet.

Teile der Vorrichtung können aber auch in einer stationären Messwarte angeordnet sein. Diese Messwarte steht dann über Funk mit dem Verdichtungsfahrzeug in Kontakt.

Ebenso kann die Messung durch ein weiteres Fahrzeug durchgeführt werden. In einer weiteren Ausführungsform der Erfindung ist die Vorrichtung auf einem separaten Messfahrzeug befestigt. Bei dieser Ausführungsform fährt das Messfahrzeug über die Oberfläche des zu verdichtenden landwirtschaftlichen Gutes und sammelt Messdaten über die Beschaffenheit des Gutes. Die auf diese Weise gesammelten Daten werden online an die Auswerteeinheit weitergeleitet und über die Anzeigeeinheit dem Benutzer zugeführt. Die Anzeigeeinheit befindet sich dabei im oder an der Verdichtungsapparatur, während die Auswerteeinheit sowohl an der Verdichtungsapparatur als auch am Messfahrzeug angebracht sein kann.

Durch das Verfahren zur Messung der Verdichtung von landwirtschaftlichem Gut und durch die dazugehörige Dichtemessvorrichtung kann die Dichte von landwirtschaftlichem Gut bereits während des Verdichtungsvorgangs online gemessen werde. Das Verfahren und die Dichtemessvorrichtung kann demzufolge auch in anderen Bereichen verwendet werden, in der eine Dichtemessung während der Verdichtung benötigt wird.

Im Folgenden wird die Erfindung anhand von Zeichnungen näher erläutert. Im Einzelnen zeigt
Figur 1 einen Traktor zur Verdichtung mit einer Vorrichtung zur Messung der Dichte und
Figur 2 eine schematische Darstellung der Vorrichtung.

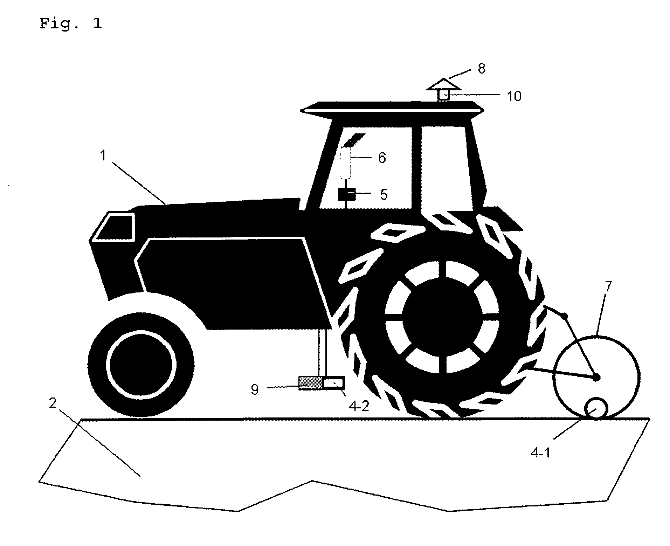

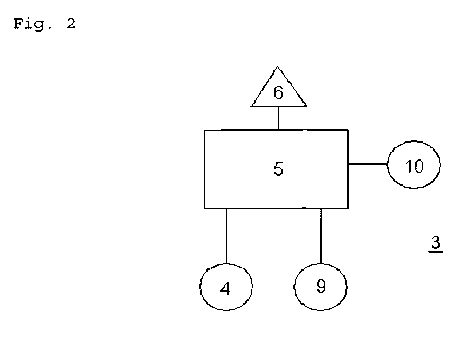

Die Figur 1 zeigt eine Verdichtungsapparatur 1, wie zum Beispiel einen Traktor, der zur Verdichtung eines landwirtschaftlichen Gutes 2, zum Beispiel eines Futterstocks, eingesetzt wird. In diesen Traktor ist eine Vorrichtung 3 (siehe Figur 2) zur Messung der Dichte eingebaut, die aus einem Dichtesensor 4, einer Auswerteeinheit 5 und einer Anzeigeeinheit 6 besteht. Die Auswerteeinheit 5 kann sowohl in den Dichtsensor 4 als auch in die Anzeigeeinheit 6 integriert sein. Es ist jedoch auch möglich, dass die Auswerteeinheit 5 ein eigenständiges Gerät ist, das zwischen Dichtesensor 4 und Anzeigeeinheit 6 geschaltet ist.

Zur Veranschaulichung ist der Traktor mit zwei Dichtesensoren 4-1 und 4-2 dargestellt.

Wird ein Dichtesensor 4-1 verwendet, dessen Funktionsprinzip den Kontakt mit dem Messgut erfordert, wird dieser zweckmäßigerweise in ein Messrad 7 eingebaut. Die Kontakt- und Messfläche des Dichtesensors 4-1 ist dabei in die Lauffläche des Messrades 7 eingepasst. Das Messrad 7 ist schwimmend am Traktor befestigt, damit es sich den Unebenheiten der Oberfläche des landwirtschaftlichen Gutes 2 anpassen kann und der Dichtesensor 4-1 mit der konstanten Kraft des Eigengewichtes des Messrades 7 auf das Gut 2 gedrückt wird. Soll keine Messung vorgenommen werden, ist es möglich, das Messrad 7 mit der Traktorhydraulik auszuheben. Das Messrad 7 kann vorn, hinten oder zwischen den Achsen am Traktor angebaut werden. Es kann auch mit einer speziellen Aushebevorrichtung verbunden sein, wenn eine Standardhydraulik an dem gewünschten Anbauort nicht zur Verfügung steht.

Da in dem dargestellten Beispiel der Dichtesensor 4-1 mit dem Messrad 7 umläuft, ist eine Messgröße immer nur im Abstand des Radumfangs zu gewinnen, wenn nicht mehrere Dichtesensoren 4-1 auf dem Umfang angeordnet werden.

Vorstellbar ist auch der Einbau des Dichtesensors 4-1 in einen Schlitten, der über das landwirtschaftliche Gut 2 gleitet oder mittels einer speziellen Aufhängung aktiv an der Oberfläche geführt wird. Durch geeignete Maßnahmen ist dann aber sicher zu stellen, dass sich der Schlitten nicht in das landwirtschaftliche Gut 2 bohrt oder das Gut 2 vor sich herschiebt.

Der Dichtesensor 4-1 wird über einen geeigneten Stromüberträger, zum Beispiel einen Schleifring aus dem Bordnetz des Traktors mit Strom versorgt. Die gemessenen Werte werden direkt oder per Funk an eine Auswerteeinheit 5 mit Anzeigeeinheit 6 (z.B. Display bzw. Bildschirm) in die Traktorkabine übertragen. Die gemessene Dichte kann digital oder analog, zum Beispiel in Farbabstufungen dargestellt werden. Gewöhnlich wird die Dichte an der Stelle angezeigt, an der sich das Messrad 8 gerade befindet und die Messung erfolgt. Es ist aber auch möglich, ein Navigationssignal (z.B. GPS) über die Antenne 8 eines Navigationssystems 10 zu empfangen, in der Auswerteeinheit 5 mit dem Dichtesignal zu verknüpfen und so die Dichtewerte über dem Siloquerschnitt darzustellen. Zur Lagebestimmung kann auch ein Signal verwendet werden, das von einem bekannten Abstandssensor am Traktor oder von der Bordelektronik geliefert wird. Denkbar ist auch, die gemessenen Dichtewerte nicht in der Fläche, sondern entlang einer Fahrspur, d.h. entlang einer Linie darzustellen.

Berührungslose Dichtesensoren 4-2, die ein Messsignal ohne Gutberührung gewinnen, können an geeigneter Stelle am Traktor gemäß der Darstellung in der Zeichnung montiert werden und erfordern keine gesonderte Vorrichtung zur Herstellung des Kontaktes mit dem landwirtschaftlichen Gut 2.

Es können auch Dichtesensoren 4 verwendet werden, die zusätzlich zur Dichte die Feuchtigkeit messen. Es ist aber auch möglich, dass ein Feuchtigkeitssensor 9 als separater eingeständiger Sensor verwendet wird. Dieser Feuchtigkeitssensor 9 kann mit und ohne Kontakt zur Oberfläche die Feuchtigkeit des landwirtschaftlichen Gutes 2 messen.

Weiterhin kann die Auswerteeinheit 5 mit einem Speicher zur Aufzeichnung der gemessen Daten versehen sein. Dies ermöglicht einen Vergleich der genommenen Daten mit früheren Messungen.

Futtersilos werden nach ungefähr einem Jahr geleert. Deshalb können die Daten ausgelesen werden und extern gespeichert werden, um somit jederzeit einen Überblick auf den Zustand in den Silos zu geben.

Die Vorrichtung 3 kann an allen Verdichtungsfahrzeugen oder Geräten eingesetzt werden, mit denen landwirtschaftliche Güter 2 auf Freiflächen, in Hallen oder in Horizontalsilos zur Konservierung verdichtet werden, wie Traktoren, Radlader, Vibrationswalzen oder ähnliches. Eine Verwendung des erfindungsgemäßen Verfahrens bzw. der Vorrichtung 3 bei der Verdichtung sonstiger Stoffe oder Untergründe ist ebenfalls denkbar.

Die Figur 2 zeigt eine Vorrichtung 3 mit der durch einen Dichtesensor 4 die Dichte eines landwirtschaftlichen Gutes 2 gemessen werden kann. Zusätzlich zur Dichte kann mit dem Feuchtigkeitssensor 9 die Feuchtigkeit des landwirtschaftlichen Gutes 2 bestimmt werden. Die von dem Dichtesensor 4 und dem Feuchtigkeitssensor 9 gemessenen Werte werden an eine Auswerteeinheit 5 weitergeleitet. Zusätzlich kann auch durch ein Navigationssystem 10 die Position bestimmt werden. Die durch dass Navigationssystem 10 bestimmten Positionsdaten werden ebenfalls an die Auswerteeinheit 5 weitergeleitet.

In der Auswerteeinheit 5 werden die gemessenen Werte mit denen für das vorliegende landwirtschaftliche Gut 2 spezifischen Soll-Werten verglichen. Die Auswerteeinheit 5 gibt ihre Daten an eine Anzeigeeinheit 6 weiter. Mit der Anzeigeeinheit 6 können die ermittelten Daten auf einem Bildschirm visualisiert werden beziehungsweise durch akustische Signale wiedergegeben werden.

### Bezugszeichenliste:

- 1: Verdichtungsapparatur
- 2: (landwirtschaftliches) Gut
- 3: Vorrichtung
- 4: Dichtesensor
- 4-1: Dichtesensor(mit Kontakt zum Boden)
- 4-2: berührungsloser Dichtesensor (ohne Kontakt zum Boden)
- 5: Auswerteeinheit
- 6: Anzeigeeinheit
- 7: Messrad
- 8: Antenne des Navigationssystems
- 9: Feuchtigkeitssensor
- 10: Navigationssystem

## Patentansprüche

1. Verfahren zur Messung der Dichte eines landwirtschaftlichen Gutes (2) **dadurch gekennzeichnet, dass** man mit einem Dichtesensor (4) während des fortgesetzten Verdichtens eines landwirtschaftlichen Gutes (2) die Dichte des landwirtschaftlichen Gutes (2) kontinuierlich oder diskontinuierlich online misst.

2. Verfahren nach Anspruch 1, **dadurch gekennzeichnet, dass** man die Messdaten des Dichtesensors (4) an eine Auswerteeinheit (5) weiterleitet und auf einer Anzeigeeinheit (6) darstellt.

3. Verfahren nach Anspruch 1 oder 2, **dadurch gekennzeichnet, dass** man die Dichte an der Oberfläche des landwirtschaftlichen Gutes (2) misst.

4. Verfahren nach einem der Ansprüche 1 bis 3, **dadurch gekennzeichnet, dass** man in der Auswerteeinheit (5) die vom Dichtesensor (4) gemessenen Werte mit dem Soll-Wert des landwirtschaftlichen Gutes (2) vergleicht und die Abweichung zwischen den Werten an die Anzeigeinheit (6) weiterleitet.

5. Verfahren nach einem der Ansprüche 1 bis 4, **dadurch gekennzeichnet, dass** man mit einem weiteren Sensor (9) die Feuchtigkeit des landwirtschaftlichen Gutes (2) misst und die Messwerte der Feuchtigkeitsbestimmung an die Auswerteeinheit (5) weiterleitet.

6. Verfahren nach Anspruch 5, **dadurch gekennzeichnet, dass** man in der Auswerteeinheit (5) die Messwerte mit dem Soll-Wert des landwirtschaftlichen Gutes (2) unter Berücksichtigung der Feuchtigkeit des landwirtschaftlichen Gutes (2) vergleicht und die Abweichung an die Anzeigeeinheit (6) weiterleitet.

7. Verfahren nach einem der Ansprüche 1 bis 6, **dadurch gekennzeichnet, dass** man die Position, an der ein Messwert genommen wird, bestimmt und diesen Positionswert an die Auswerteeinheit (5) weiterleitet.

8. Verfahren nach einem der Ansprüche 1 bis 7, **dadurch gekennzeichnet, dass** die Anzeigeeinheit (6) die Dichte des landwirtschaftlichen Gutes (2) akustisch wiedergibt und/oder visuell darstellt.

9. Vorrichtung (3) zur Durchführung des Verfahrens nach einem der vorhergehenden Ansprüche, bestehend aus mindestens einem Messsensor und mindestens einer Anzeigeeinheit (6), die mit einer Auswerteeinheit (5) verbunden sind.

10. Vorrichtung (3) nach Anspruch 9, **dadurch gekennzeichnet, dass** der Messsensor ein Dichtesensor (4), und/oder ein Feuchtigkeitssensor (9) ist.

11. Vorrichtung (3) nach Anspruch 9 oder 10, **dadurch gekennzeichnet, dass** eine Messeinheit zur Bestimmung der Position der Messung vorgesehen ist.

12. Vorrichtung (3) nach Anspruch 11, **dadurch gekennzeichnet, dass** die Messeinheit ein Navigationssystem (10) ist, das die Position der Messung bestimmt und an die Auswerteeinheit (5) weiterleitet.

13. Vorrichtung (3) nach Anspruch 11, **dadurch gekennzeichnet, dass** die Messeinheit ein Wegemesssystem, ein Abstandsmesssystem oder ein Lagemesssystem ist.

14. Vorrichtung (3) nach einem der Ansprüche 11 bis 13 **dadurch gekennzeichnet, dass** zwei oder mehrere der genannten Messsysteme vorgesehen sind.

15. Vorrichtung (3) nach einem der Ansprüche 9 bis 14, **dadurch gekennzeichnet, dass** die durch den Messsensor und/oder Messeinheit gemessenen Werte und durch die Auswerteeinheit (5) mit dem Soll-Wert des landwirtschaftlichen Gutes (2) verglichenen Werte durch eine Anzeigeeinheit (6) akustisch wiedergebbar und/oder akustisch darstellbar sind.

16. Vorrichtung (3) nach einem der Ansprüche 9 bis 15, **dadurch gekennzeichnet, dass** sie in eine Verdichtungsapparatur (1) eingebaut ist oder an ihr befestigt ist.

17. Vorrichtung (3) nach Anspruch 16, **dadurch gekennzeichnet, dass** einzelne Teile der Vorrichtung (3) an der Verdichtungsapparatur (1) angebracht sind, während die übrigen Teile der Verdichtungsapparatur (1) in einer stationären Messwarte angeordnet sind.

18. Vorrichtung (3) nach einem der Ansprüche 1 bis 15, **dadurch gekennzeichnet, dass** die Vorrichtung (3) auf einem separaten Messfahrzeug befestigt ist.
